# EUROPEAN PATENT APPLICATION

(11) **EP 1 564 669 A1**
(43) Date of publication of application: **17.08.2005**
(21) Application number: 05100573.4
(22) Date of filing: 28.01.2005
(51) Int. Cl.: G06F 17/60

(54) **Method, system, and service for tracking and billing for technology usage**

(30) Priority: 12.02.2004 US 777429
(71) Applicant: International Business Machines Corporation, Armonk, N.Y. 10504 (US)
(72) Inventor: Cheston, Richard W., c/o IBM United Kingdom Ltd., Winchester, Hampshire SO21 2JN (GB); Cromer, Daryl Carvis c/o IBM United Kingdom Ltd., Winchester, Hampshire SO21 2JN (GB); Locker, Howard Jeffrey c/o IBM United Kingdom Ltd., Winchester, Hampshire SO21 2JN (GB); Vanover, Michael T. c/o IBM United Kingdom Ltd., Winchester, Hampshire SO21 2JN (GB)
(74) Representative: Waldner, Philip

(57) **Abstract**

A system is provided with at least one differentiating, chargeable technology. Methods of selling and pricing the system are disclosed allowing the system to be sold at a reduced initial purchase price. The execution by a user of the system of the chargeable technology is tracked and charged for on a per-usage basis. Systems and methods are disclosed for tracking, recording and reporting data regarding the execution of the chargeable technology.

## Description

### Technical field

The present invention is in the field of data processing systems and computer technology. More particularly, the present invention relates to the provision of differentiating technology and the tracking and billing for the usage of such technology.

### Background art

In the field of data processing systems, that is, all types of computers, including personal computers, portable computers, servers, large systems, etc., the capabilities of the systems have largely progressed faster than the requirements of the applications used on such machines. As such, almost any computer available, especially in the personal computer (PC) market, will technically satisfy the basic needs of the prospective buyer. In fact, many potential buyers are overwhelmed by the potential of the technology when considering a purchase.

In light of such an environment, the computers themselves are becoming commodities, almost interchangeable in the buyer's mind, in spite of being manufactured or provided by different companies. It is very difficult for a provider of such machines to differentiate its products from its competitors. As such, price becomes the main factor seized upon by the buyer in order to make a purchase decision. Additional technology or function in a machine almost becomes a disadvantage because the development, implementation and support costs associated with such additional technology makes it difficult to compete on a price basis.

Exacerbating this problem in the PC market is the continuing standardization of PC products. PCs from any company tend to be based on only a handful of architectures (IBM®, Apple®), a handful of main processing chipsets (Intel®, AMD®) and a handful of operating systems (Windows®, Linux®, Apple). The great majority of PCs sold are IBM-architected on an Intel chipset running the Windows operating system. This increases the perception of a prospective purchaser that all PCs are the same.

In an attempt to make sense of the relative values of the available systems, some purchasers, especially enterprise purchasers who purchase large numbers of systems, are beginning to analyze products based on a 'total cost of ownership.' The total cost of ownership of a product includes the initial purchase price plus the costs and expenses of supporting, upgrading and servicing the machine over its expected lifetime. Such an analysis preferably includes the costs associated with down-time caused by expected problems with the machine. Because it is the most obvious and immediate expense associated with a purchase, initial purchase price is still an important factor under a total cost of ownership analysis. When purchasing a large number of machines for an enterprise, a relatively small difference in the initial price of an individual machine can make a large difference in the total amount of money the enterprise has to expend up front.

Manufacturers and sellers have recognized both the over-abundance of capability in current PCs relative to common applications and the importance of total cost of ownership to the prospective buyer. As a result, system providers have expended large amounts of money and effort developing new and innovative technologies for their systems. Some of these technologies may be directed at helping the customer avoid costs associated with managing and maintaining the systems and especially with avoiding or minimizing the effects of computer downtime. As such, these technologies may only be used infrequently by the customer, such as when experiencing a problem or when a rare condition occurs.

In the current market as it is understood, it is very difficult for a seller to draw a buyer's attention with such technology. Purchasers may not understand or appreciate the value of such technology when considering a purchase. The true value may only be understood when it becomes time to use it - far too late to influence a purchase decision. Because of the commoditization of the systems themselves, the price sensitivity of the market and the lack of buyer appreciation for the differentiating technology, a seller has great difficulty recovering the costs associated with developing and delivering such technologies. Increasing the purchase price of the system in an attempt to recover such costs will cause many prospective purchasers to immediately look elsewhere.

In the past, some vendors, especially software vendors, have attempted to charge for differentiating functions or technologies separately. This has typically been done by (i) providing the underlying technology or capability at an initial purchase time but rendering it inoperable in some way, (ii) requiring the user to connect with the vendor and purchase the capability to invoke the function, using, for example, an online system where a token is delivered or by providing an unlocking password over the phone or otherwise. Normally, once purchased, the token or password provides unlimited usage of the function. Alternatively, the user could purchase a limited number of executions of the function.

This method has several disadvantages. First, the user must contact the vendor to obtain use authorization. This causes a delay between the decision to use the technology and the capability to use it. Depending on the technology involved, such a delay could be seriously problematic. Second, the user may not be able to contact the vendor right away. If an online contact method is used, the user's system may not be connected to the network when the need for the technology arises or either of the user's or the vendor's system could be down. Other contact methods may be unavailable during non-working hours, holidays, etc. Third, a user must either purchase an unlimited use right or a right to use the technology a certain number of times. Unlimited may be far beyond the user's expected requirements but, depending on the options offered by the vendor, it may be difficult to estimate how much use will be needed - purchase too much and you waste money, too little and you have to go through the bother of purchasing more later.

### Disclosure of the invention

With the above problems and disadvantages in mind, embodiments of the present invention are provided, including methods of selling and pricing computing systems. The disclosed embodiments presume the presence in the computing system of a chargeable technology. A chargeable technology is a capability of function implemented in the hardware or software of the computing system as provided which is unique or innovative as compared to the technologies or capabilities present in comparable computing systems from other providers. As such, the presence and availability of the chargeable technology has some value to users of the computing system, over and beyond the value of the comparable systems. Examples of such chargeable technologies include Rapid Restore™ Ultra and Client Rescue and Recovery™, both from IBM®. Each of these technologies is designed to help users recover from potentially catastrophic system problems while avoiding data loss and saving significant time and effort compared to comparable systems without such technology. The present invention is equally applicable to other types of differentiating technologies, now known or later developed by any provider.

Embodiments of the present invention contemplate charging a purchaser of a computing system a lower initial purchase price than would normally be charged for such a system. The purchaser's initial cost may in fact be lower than a provider would normally have to charge in order to 'break even' financially, even for a system without such technology.

The lower initial price allows the provider of the system to garner the attention of potential purchasers. The traction gained by this initial attention may be leveraged by the provider to describe and sell the chargeable technology to the buyer. The nature of the chargeable technology is preferably such that it will be helpful to the user, especially in avoiding or minimizing the effects of downtime, but only on an occasional basis, such as when serious system problems occur.

In accordance with embodiments of the present invention, the purchaser is made to understand that usage of the chargeable technology will be tracked and the user will be charged additional amounts based on how many times the technology is utilized. The charges may be billed on a monthly, quarterly or other basis. In this way, a purchaser's initial purchase price is lowered, easing the burden of the initial purchase. The user is then charged additional amounts, but only to the extent the chargeable technology(ies) prove useful. If the provider of the system and the chargeable technology has correctly identified the needs of users of their computing systems, the additional charges will help recover the development, implementation and delivery costs associated with the chargeable technology.

Another aspect of the present invention discloses computing systems including components allowing the secure and unobtrusive tracking of the use of the chargeable function(s). The tracking and storage of such information is preferably transparent to, and hidden from, the user. In addition, the tracking and storage of such information should be protected from tampering by the user or others to ensure accuracy. Computing systems in accordance with embodiments of the present invention further have the capability to forward the information concerning the usage of the chargeable technology to a central location. The information may be forwarded to a network administrator. Preferably, the information is forwarded to a centralized location where the provider of the system, or a third-party service provider operating on behalf of the provider, may gather such usage information and bill the user for the usage as previously arranged, i.e., monthly, quarterly, etc. For large enterprise customers, the usage information from the many systems in the enterprise's network may be accumulated and combined to allow for consolidated billing.

In accordance with one embodiment of the present invention, the computing system is configured with a primary boot image/operating system for 'normal' operation and at least one secondary boot image/operating system for auxiliary, diagnostic and tracking processing. This secondary boot image is preferably located in storage that is hidden from a user and protected from tampering via any of the current known techniques for protecting computer storage. The data maintained and used by this secondary boot image in operation is similarly hidden and protected. The secondary boot image may gain control upon the occurrence of certain types of system problems, preferably the types of system problems addressed by the chargeable technology(ies). This transfer of control to the secondary operating system may be automatic or may be upon user request via some unique command or key sequence.

In operation in accordance with embodiments of the present invention, the alternate operating system may offer the user the opportunity to execute one or more of the chargeable technologies. Upon execution, the usage is tracked, with the relevant information such as time/date of use, technology executed, and identifying information related to the system, stored in protected storage. Preferably, the tracked information is encoded or encrypted in some way to further prevent tampering. The information may be encrypted, hashed and signed in accordance with any of such known techniques.

Periodically during operation, or perhaps upon gaining control, the alternate operating systems queries the usage data to see if chargeable usage has occurred. If it has, the alternate operating system automatically and transparently connects to the network and forward the usage information to the correct central location. Once forwarded, the usage information is cleared. If a network connection is unavailable for any reason, the information is maintained in storage to be forwarded at a later time.

Further aspects of the present invention include the operation of the centralized billing location. The centralized location may be a server or other computing system located at, or controlled by, the provider of the computing system, or, alternatively, at a third-party service provider acting on behalf of the provider. Such centralized location is configured to receive chargeable technology usage data forwarded from client computing systems, including decrypting or otherwise decoding the information according to known techniques, where required. The received data may be stored and archived for record keeping purposes. Usage data is processed on a monthly, quarterly or other basis, according to established policies. Data for many users operating as part of a larger, enterprise customer may be consolidated and presented as one usage charge. The central location may also provide data to the user indicating patterns of usage of the various chargeable technology(ies). This pattern data may be provided periodically or as requested by the users. Such pattern data will be helpful to the user in determining the value received as a result of the chargeable technology(ies). The central location may further be capable of communicating with client computing systems over the network to update the data forwarding address, provide new versions of the computer code associated with the chargeable technology(ies), etc.

The invention according to one embodiment is implemented as a service provided by one or more third parties. In this embodiment of the invention, a provider of, for example, billing or other services on behalf of a provider of computing systems, or otherwise, provides a customer with the chargeable technology and the alternate operating system or other software to track and report the technology usage as described above. The service provider then receives and tracks the technology usage information. Finally, the service provider creates bills for the technology usage in accordance with established policies, including, where appropriate, consolidating bills for multiple users.

### Brief description of the drawings

Other objects and advantages of the invention will become apparent upon reading the following detailed description and upon reference to the accompanying drawings in which:

Figure 1 is a block diagram of a computer system according to an embodiment of the present invention;

Figure 2 is a block diagram of the system of Figure 1 illustrating an example configuration of the non-volatile storage of the system;

Figure 3 is a flow diagram illustrating the provision of systems in accordance with an embodiment of the present invention;

Figure 4 is a flow diagram illustrating the operation of a system of Figure 1 in accordance with an embodiment of the present invention;

Figure 5 is a flow diagram illustrating the operation of a system of Figure 1 in accordance with an alternate embodiment of the present invention;

Figure 6 is an illustration of an exemplary configuration of the non-volatile storage of a system of Figure 1 when operating in accordance with the embodiment illustrated in Figure 5;

Figure 7 is a block diagram of a central location computer system in accordance with embodiments of the present invention;

Figure 8 is a flow diagram illustrating the operating of a central location computer system of Figure 7; and

Figure 9 is a flow diagram of a service operating in accordance with embodiments of the present invention.

While the invention is susceptible to various modifications and alternative forms, specific embodiments thereof are shown by way of example in the drawings and will herein be described in detail. It should be understood, however, that the drawings and detailed description presented herein are not intended to limit the invention to the particular embodiment disclosed, but on the contrary, the intention is to cover all modifications, equivalents, and alternatives falling within the spirit and scope of the present invention as defined by the appended claims.

### Mode(s) for carrying out the invention

Generally speaking, embodiments of the present invention contemplate computing systems provided with one or more chargeable technologies. Each of these chargeable technologies is presumed to be a technology which provides differentiating functions or capabilities relative to competing or alternative systems. These technologies are also presumed to be of the kind which prove useful only in limited circumstances or on an other-than-daily basis, such as when system errors or problems occur. Preferably, these technologies are designed to help a user of the system avoid or minimize the problems, costs and losses associated with the system errors or problems and any system downtime. Other than the presence of the one or more non-limiting chargeable technology, and the specific usage tracking and reporting capabilities discussed below, the computing systems in accordance with the present invention could be any computing system known to those skilled in the art, including a server, a personal computer (PC), a large system, etc.

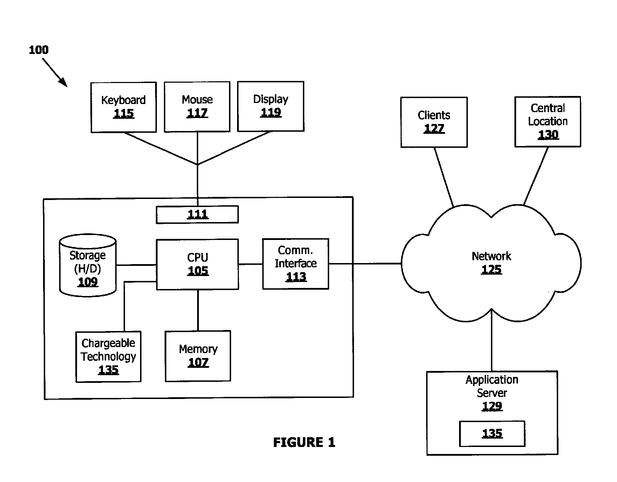

Referring now to Figure 1, a block diagram is shown of a generic computing system in accordance with embodiments of the present invention. Computing system 100 is provided with a central processing unit (CPU) 105 controlling execution of the system 100 and executing software implementing the functions disclosed herein. Interfacing with the CPU 105 are memory 107, a hard-drive or other non-volatile storage 109, an input-output (I/O) interface 111 and a communication interface 113. CPU 105 may be any suitable processor known in the industry such as an Intel® Pentium® chip, an AMD® chipset or another main processing chip or chipset, now known or later developed. Memory 107 may be any type of volatile, temporary storage known in the industry and used to store data and instructions in use by the CPU 105. Non-volatile storage 109 may be a hard-drive or other storage accessible by the CPU 105 and storing an operating system (not shown) such as Microsoft® Windows®, Linux®, etc. which executes on CPU 105 in controlling the system 100. Storage 109 may also hold other applications and data to be accessed by the CPU 105. I/O interface 111 connects CPU 105 to various input-output devices such as a keyboard 115, a mouse 117 and a display 119. Various other I/O devices (not shown) known in the industry may also be connected to CPU 105. The I/O interface 111 may be a bus, such as a PCI Bus or other industry standard bus, or any other known or later developed interface device. Communications interface 113 connects the system 100 to network 125. Network 125 may be a local area network (LAN), a wide area network (WAN), a company intranet, the internet or any other network allowing the system 100 to communicate with other computing devices. Network 125 may follow any known or later developed network protocol such as ethernet, token ring, TCP/IP, etc. Network 125 may also be comprised of many networks, each potentially operating according to a different protocol, connected one to the other via various network bridges (not shown), all as is well-known to those skilled in the related arts.

Also connected to network 125 are other computing devices such as other client computers 127, an application server 129 and a central location server 130 whose function is further discussed below. Network 125 may also include other computing devices of various types (not shown), all potentially in communication with each other and with system 100 via the communication interface 113.

In accordance with the present invention, computing system 100 also includes at least one chargeable technology 135, represented in Figure 1 as housed within computing system 100. Chargeable technology 135 may comprise hardware, software or a combination of the two. Despite the representation in Figure 1, chargeable technology 135 may comprise, wholly or in part, an application stored on hard drive 109 along with the system O/S and other applications (not shown). Alternatively, also as shown in Figure 1, chargeable technology 135 may be located, at least in part, on application server 129 or may otherwise by accessible by system 100 (via CPU 105) remotely. In addition, computing system 100 may be provided with, or provided with access to, more than one chargeable technology 135, each of which may be located or accessed differently.

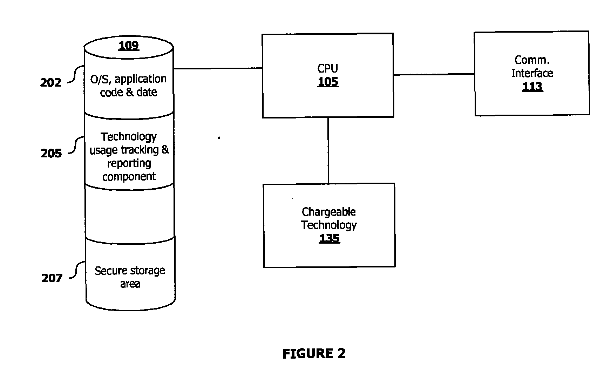

Embodiments of the present invention contemplate the ability of computing system 100 to recognize and track the execution by CPU 105 of the chargeable technology 135. Referring now to Figure 2, a block diagram is shown of computing system 100, illustrating the chargeable technology usage tracking capability. As described with respect to Figure 1, chargeable technology 135 may comprise, wholly or in part, an application stored on hard drive 109 along with the system O/S and other applications (not shown). The hard drive 109 is shown as holding the operating system, applications and data 202 utilized by CPU 105 under normal operating conditions. Also shown on hard drive 109 is a technology usage tracking and reporting component 205. These elements are illustrated as occupying certain sections of hard drive 109 but may be stored and accessible by CPU 105 in any manner known in the industry. Tracking and reporting component 205 executes on CPU 105 and recognizes when any chargeable technology 135 is executed. Upon such recognition, component 205 gathers information relative to the execution, such as time/date, unique system identification (such as UUID, system serial number, digital certificate or other identifying information known to those skilled in the arts), identity of technology executed, etc. and stores the information in a secure storage area 207. Secure storage 207 is illustrated as a section of hard drive 209 but may be located elsewhere within computing system 100 or even external to system 100 on a different storage device (not shown) or via network 125. The information may be stored temporarily on hard drive 109 or in memory 107 until network 125 is available.

Importantly to embodiments of the present invention, the operations of tracking and reporting component 205 are transparent to and hidden from a user of system 100. In this way, the operation of component 205 does not interfere with the user's use and enjoyment of system 100 and, in the same way, the user cannot interfere or tamper with the operation of component 205. Similarly, the secure storage area 207 is preferably hidden from the user and protected in some way from tampering. Secure storage area 207 may be hidden from view and protected from tampering in any number of ways well-known to those skilled in the related arts.

Embodiments of present invention include methods and processes for pricing and selling computing systems 100. A provider of computing systems operating in accordance with embodiments of the present invention sets an initial purchase price of a system 100 which is lower than such price would be set outside of the present invention. In fact, the initial purchase price for the system may be set lower than would normally be set for systems which do not include the differentiating, chargeable technology(ies) discussed above. This runs counter to prior art pricing strategy for a product including additional technology. An initial purchase price for such a product would typically be increased relative to products without such technology in order to recover the development, implementation and delivery costs associated with the differentiating technology. The initial purchase price of a system 100 according to the present invention may even be set at a level where, without additional revenue, the provider of the system would lose money. This may be done because, in accordance with methods of the present invention, the provider expects to receive additional income associated with the system and the differentiating technology, as described in relation to the embodiments discussed below. As contemplated herein, a provider of computing systems 100 may be the manufacturer, a system retailer, a third-party selling agent or other provider.

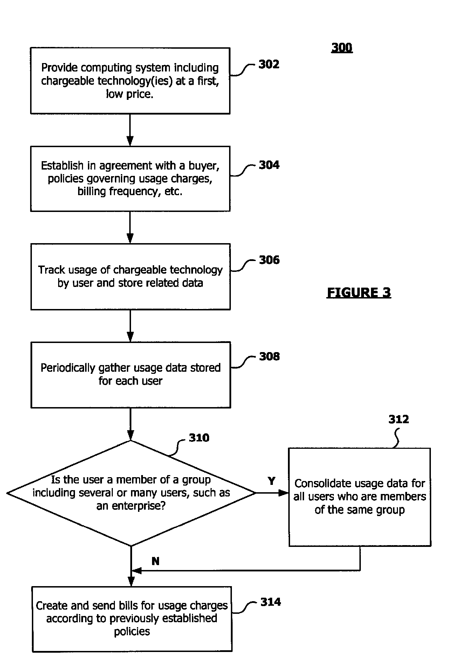

Referring now to Figure 3, illustrated is a method 300 of selling and pricing computing systems 100 in accordance with an embodiment of the present invention. At 302, the provider sells or otherwise provides a computing system 100 at an initial price which is lower than typically expected, as described above. The computing system 100 includes at least one chargeable technology as illustrated in Figures 1 and 2. At 304, the provider, in agreement with the purchaser, establishes policies governing additional amounts to be billed for use of the chargeable technology(ies). These policies will be established based on agreed-upon market values and will cover per-use charges, billing and payment policies including frequency of reporting and billing, etc.

When a user takes possession of the system 100 and executes any of the chargeable technologies, the process 300 detects and tracks the usage at 306. Tracking the technology usage 306 includes recording information about the usage such as time and date, technology executed and unique system/user identification information. Periodically, as determined by the policies established at 304, the usage data is gathered for each user. At decision diamond 310, for each user a determination is made whether the user is a member of a group of users, such as employees using systems at a large enterprise. For each user that is a member of such a group, the usage data for that user is consolidated at 312 with the usage data for all other members of the same group. At 314, usage reports and bills are created and sent representing per- use charges associated with the chargeable technology(ies). These bill are created based on the actual usage data gathered at 308 (and consolidated at 312, where appropriate) and the pricing and other policies established at 304.

Several advantages are apparent in the implementation of the process according to Figure 3. For the user, the initial monetary burden of purchasing the system is lessened to an extent not previously possible. Further, system 100 includes differentiating technology in the form of at least one chargeable function 135 which presumably will prove useful in improving the efficiency of use of the system 100. Finally, the user must pay additional amounts only to the extent the differentiating technology actually proves useful - eliminating the risk of paying extra for technology that is never used. For the system provider, hte lower initial purchase price draws the attention of potential purchasers and provides the opportunity to sell users on the advantages of the provided technologies where it would otherwise be difficult to gain such attention. Additionally, the technology usage charges associated with the chargeable technology(ies) provide an additional and ongoing revenue stream, allowing the recovery of the development, implementation and delivery costs associated with the chargeable technology(ies). Such ongoing revenue also helps to even out the overall revenue stream of the system provider over time.

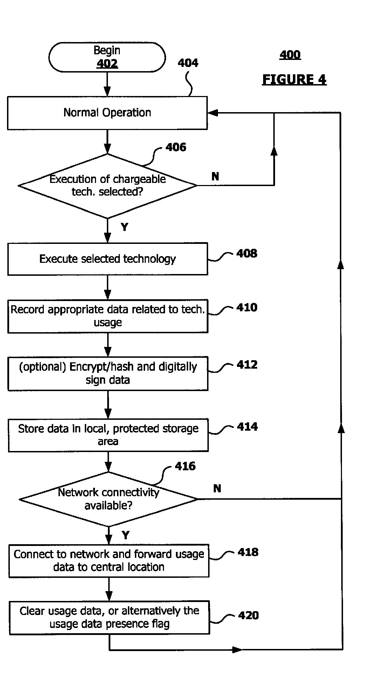

The process 400 implemented in a system 100 in accordance with embodiments of the present invention is illustrated in Figure 4. At 402, the process begins with the system 100 in normal operating mode 404. At decision diamond 406, the system monitors for execution of any chargeable technology. The execution may be initiated by a user or may occur automatically under certain circumstances. As long as no chargeable technology is executed, the system continues normal operations at 404. If a chargeable technology is selected for execution, the technology is executed at 408 and data related to the execution is collected at 410. The data collected at 410 may include the data and time of the execution, the identity of the technology used, unique identification information associated with the system and/or user, etc.

The process of Figure 4 may optionally include step 412 where the usage data collected at 410 is encrypted and/or hashed and possibly digitally signed. These functions may be performed according to any known or later developed standards or techniques appropriate therefore, such as symmetric or asymmetric public key encryption, for example, as such techniques and standards are well known to those skilled in the relevant arts. Such encryption, etc. increases the security of the data and helps prevent tampering. At 414, the data is stored in a location which is hidden from a user of the system 100 and which is protected from tampering. The location may be hidden and protected in any number of ways known to those skilled in the arts, including using the hidden file and hidden partition capabilities of many systems, for example.

The process of Figure 4 may end after step 414 or may optionally include steps 416, 418 and 420 as discussed below. Alternatively, steps 416, 418 and 420 may be part of a separate process which executes periodically, as requested by a user or remotely by a central location, automatically upon certain occurences, such as a certain number of technology executions, or according to some other schedule or policy.

At optional decision diamond 416, a determination is made as to whether network connectivity is available to the system 100. If no network connectivity is available the process ends with a return by system 100 to normal operations. If network connectivity is available, at 418 the system establishes a network connection and forwards all chargeable technology usage data to a central location for processing. The network address of the central location may be configured on the system 100 when the chargeable technology(ies) are installed and is accessible to the process 400. The network address of the central location may be updated from time to time by the system as directed by communication from the central location or otherwise. Once all the stored technology usage data has been forwarded to the central location, the data is cleared from storage at 420. Alternatively, the data may maintained in storage for record-keeping purposes and marked as sent using a flag appropriate for the purpose. In that event, a data presence flag may be used to indicate the presence of technology usage data that needs to be forwarded to the central location. In accordance with such an embodiment, the data presence flag would be checked to determine if usage data needed to be forwarded and the flag would be cleared after sending all usage data that had not been previously forwarded. The process 400 ends with a return to normal operations at 404.

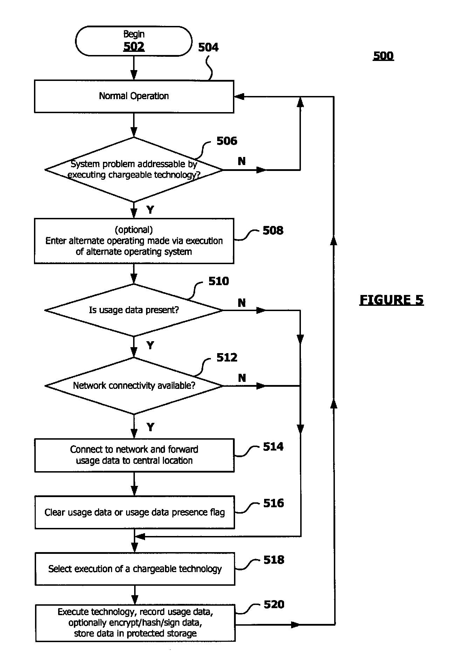

An alternative process 500 implementing another embodiment of the present invention is illustrated in Figure 5. At 502, the system process 500 begins with the system 100 in normal operating mode 504. At decision diamond 506, the system monitors for a problem or occurrence best addressed by the execution of one of the chargeable technologies. As long as no such problem or occurrence is detected, the system remains in normal operating mode 504. When a problem is detected, the system may optionally boot at 508 into an alternate boot image or operating system provided in system 100.

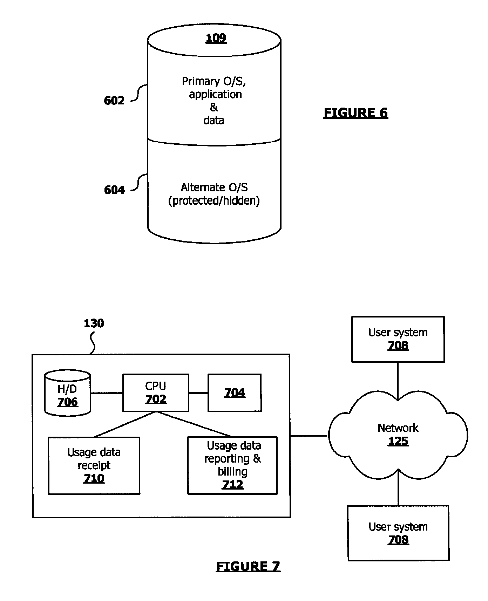

This alternate boot image or operating system may be stored in the system BIOS, on a bootable device such as a CD or USB-connected device, and/or in a protected and secure area of the hard drive 109 on system 100. It may also be stored remotely on the network 125 where the system 100 has the ability to remotely boot using remote PXE or other industry standard remote boot capability, as such capabilities are well known to those skilled in the relevant arts. Figure 6 illustrates a non-limiting embodiment of system 100 in accordance with the process 500 where hard drive 109 of system 100 is provided with a primary partition 602 holding the primary system operating system (O/S), applications and data used in normal operating mode. Hard drive 109 of Figure 6 also includes an additional partition 604 holding an alternate O/S and, optionally, alternate applications and data. In accordance with this embodiment of system 100, the execution of the chargeable technology(ies) and the tracking and reporting of technology usage data is controlled by the alternate O/S and applications in partition 604. Partition 604 is presumed to be hidden from users of system 100 and protected from tampering using known techniques appropriate therefore.

The remaining steps of process 500 may be executed under the control of the primary O/S or the alternate O/S, depending on the optional inclusion of step 508. In any event, the steps of process 500 occur transparently to the user and do not affect the user's productive use of system 100. Process 500 continues at decision diamond 510 where it is determined whether technical usage data is present. This determination may be made based on the value of a usage presence flag on may be based simply on the presence of data in certain storage fields. If data is present, a determination is made at 512 whether network connectivity is available. If network connectivity is available, a network connection is established at 514 and the technology usage data is forwarded to the central location for processing in accordance with the present invention. At 516, the existing usage data, or the usage presence flag, as appropriate per the embodiment, is cleared and the process continues at 518. If it is determined at 510 that no usage data is present, or at 512 that no network connectivity is available, the process continues at 518.

At 518, the execution of a chargeable technology is selected. This selection may be as a result of a user initiation, such as selection of a technology from a presented menu of the execution by the user of a predetermined command or key sequence. The selection could also occur automatically as a result of the system problem detected at 506. The particular technology executed may depend on the specific problem or eventuality encountered. At step 520, the process continues with the execution of the selected technology, the recording of the usage data, the optional encryption/hashing/signing of the data and the storing of the usage data in a hidden, protected area. Step 520 corresponds to steps 408, 410, 412 and 414 of process 400 which were discussed in more detail with regard to Figure 4.

As mentioned above with respect to steps 416, 418 and 420 of Figure 4, steps 510, 512, 514 and 516 of process 500 may optionally occur elsewhere in the process or may alternatively be part of a separate process executed periodically or upon the occurrence of a pre-defined event, such as a certain number of executions of a chargeable technology or as otherwise pre-determined.

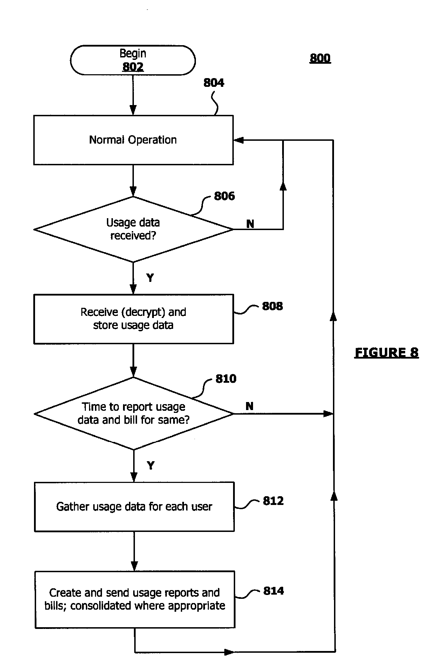

In accordance with other aspects of the present invention, a computer processing system 130 operates as the central location to which technology usage data is forwarded, as depicted in Figure 7. Central location 130 according to embodiments of the present invention is provided with a CPU 702 interfaced with a communications interface 704 and a hard drive or other non-volatile storage 706. Other components of central location 130 not essential to this discussion are omitted but may be presumed to be typical of a modern data processing system. Communications interface 704 provides connectivity to network 125 as described with respect to Figure 1. Also connected to network 125 are any number and variety of other user systems 708 (only two being shown as an example). User systems 708 may include end user/client systems as well as enterprise system administrator systems. Central location 130 is also provided with a technology usage data receiving component 710. Receiving component 710 may be located on hard drive 706 or may be located in other suitable locations within central location 130 or external to central location 130, as long as receiving component 710 is accessible for execution by CPU 702. In operation, as chargeable technology usage information is received from user systems 708 via the network 125 through communications interface 704, receiving component 710 executes under control of CPU 702 to receive the data and store it in non-volatile storage 706. The usage data is stored in such a way as to be retrievable and grouped according to reporting user. The usage data may be received in encrypted form requiring receiving component 710 to decrypt the data before storing it, using the applicable, known decryption method.

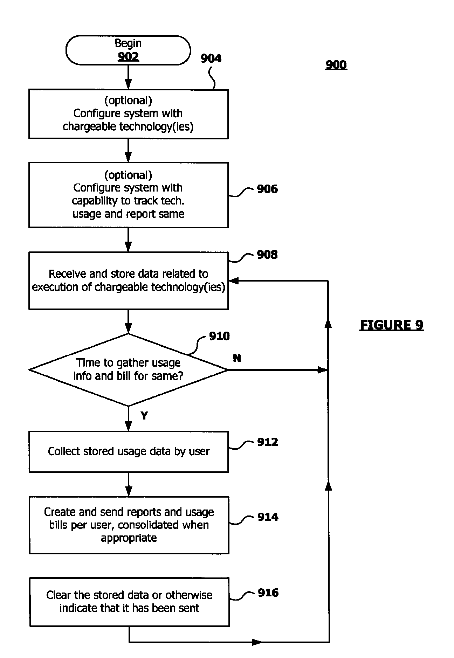

Central location 130 is further provided with a technology usage reporting and billing component 712 which is accessible by and to the CPU 702 and non-volatile storage 706. Like receiving component 710, usage reporting component 712 may be located on hard drive 706 or may be located in other suitable locations within central location 130 or external to central location 130, as long as reporting component 712 is accessible for execution by CPU 702. Usage reporting component 712 operates under control of the CPU 702 to gather the stored technology usage data from the non-volatile storage 706 and create and send usage reports and bills to users for the reported technology usage. Bills are created based on actual usage and the pre-determined billing rates and other policies. Usage reporting component 712 executes on a monthly, quarterly or other schedule as determined by established policy. Usage reports and accompanying bills may be forwarded via communications interface 704 and network 125 to the appropriate user systems. If connectivity is not available to one or more user systems at the time reports and bills are to be forwarded, reporting component 712 simply marks the usage data associated with such unavailable user systems as un-sent and sends the reports and bills at a later time. Usage data is consolidated for all users belonging to the same, larger group before reports and bills are generated or sent. Figure 8 illustrates a process 800 performed by central location 130 as depicted by Figure 7 in accordance with embodiments of the present invention. Central location 130 begins process 800 at 802 by proceeding to a normal operating mode at 804. At decision diamond 806, central location 130 monitors for receipt of technology usage data over the network 125. As long as no usage data is received, normal operations continue at 804. If receipt of usage data is detected, processing continues at 808 where the data is received, decrypted if necessary and stored locally at central location 130.

At 810, a determination is made whether it is time to create usage reports and bills for the reported technology usage. This could be done on a scheduled basis, such as monthly, quarterly, etc., as initiated by a user of central location 130, as requested remotely by one of the user systems 708, or according to any other schedule or event detection. If the creation of usage reports and bills is not indicated, processing continues at 804 with normal operations. If the creation of usage reports and bills is indicated, processing continues at 812 where usage data is gathered for each user. At 814, usage reports and bills are created and sent to users for the reported technology usage. Bills are created based on actual usage and the predetermined billing rates and other policies. Usage reports and accompanying bills are forwarded to the appropriate users via communications interface 704 and network 125 (see Figure 7). If connectivity is not available to one or more user systems at the time reports and bills are to be forwarded, the usage data associated with such unavailable user systems is marked as un-sent (not shown) and the reports and bills are sent at a later time (such as the next time reports are to be sent, or the next time connectivity is available). Usage data is consolidated at 814 for all users belonging to the same, larger group before reports and bills are generated or sent. In the case of an enterprise customer, the consolidated usage report and bill may be forwarded to a network administrator or other company coordinator for processing on behalf of the enterprise. Processing continues with normal operations at 804.

Once usage data has been processed into reports and bills and sent, it can be cleared from storage. However, in order to facilitate record-keeping and auditing, the usage data reported during process 800 is preferably not cleared or erased after forwarding. Instead, any type of suitable flag may be associated with the stored technology usage data. The flag may be set to a first value when the data is originally received and stored. This value will indicate to central location 130 and process 800 that the data has not been incorporated into a report or bill and sent to the user. Once the data is incorporated into a report and bill and sent to the user, the flag may be set to a second value. As such, central location 130 and process 800 can recognize what data has already been processed into a usage report and bill and thus avoid processing the same usage data more than once.

Another aspect of the present invention contemplates embodiment as a service provided by a third- party service provider acting on behalf of the provider of system 100 or otherwise. In such an embodiment, the service provider may provide the one or more chargeable technology(ies) for inclusion in the system or the chargeable technology(ies) may be provided on the system by the manufacturer or other provider of the system 100. Similarly, the service provider may configure the system 100 with the capability to track and report the use of any of the chargeable technologies. Alternatively, the system may be so configured by the manufacturer or other provider of the system 100.

Figure 9 illustrates a process 900 according to embodiments of the present invention contemplating execution by a service provider. Process 900 begins at 902 and proceeds to optional step 904 where the service provider configures a system with at least one chargeable technology. The process proceeds to optional step 906 were the system is configured with the capability to track the usage of the chargeable technology(ies) and report the usage to a central location. At 908, the service provider receives and stores data related to the execution by a user of a chargeable technology. The data reported and stored may include the date/time of execution, the identity of the executed technology and of the user or system, etc.

A determination is made at decision diamond 910 whether it is time to gather the stored data and create usage reports and bills. The timing of such reporting/billing may be according to established policy and may be monthly, quarterly or otherwise. If it is determined at 910 that it is not time to report/bill for the technology usage, processing returns to 908 to continue receiving and storing any incoming technology usage data. If it is time to report, the stored technology usage data is gathered by user at 912. At 914, technology usage reports and bills are created and sent to the respective users. Where appropriate, consolidated bills and reports are created from data consolidated from users belonging to the same, larger group, such as an enterprise. If connectivity is not available to one or more user systems at the time reports and bills are to be forwarded, the usage data associated with such unavailable user systems is marked as un-sent (not shown) and the reports and bills are sent at a later time (such as the next time reports are to be sent, or the next time connectivity is available). Once processed and sent, the stored usage data is either cleared or marked as sent at 916, as described in more detail with respect to Figure 8 above.

When embodied as a service provided by an entity other than the provider of the system 100, the present invention contemplates maintaining the relationship between the users of systems 100 and the provider of the systems 100. As such, technology usage reports and bills created by the service provider in accordance with process 900 of Figure 9 may be forwarded to the provider of the systems 100 used in executing the chargeable technology(ies), instead of to the users themselves. The system provider may then forward the usage reports and bills to the respective users in order to maintain the customer-provider relationship more directly.

Substantial portions of the present invention may be implemented as a set or sequence of computer executable instructions (i.e., computer software). In such embodiments, the software may be stored on any of a variety of computer readable media including, as examples, magnetic disks and or tapes, floppy drives, CD ROM's, flash memory devices, ROM's and so forth. During periods when portions of the software are being executed, the instructions may also be stored in the system memory (DRAM) or internal or external cache memory (SRAM).

It will be apparent to those skilled in the art having the benefit of this disclosure that the present invention contemplates the provision of systems including certain differentiating, chargeable technology and advantageous methods for selling such systems and tracking and charging for use of such technology. It is understood that the form of the invention shown and described in the detailed description and the drawings are to be taken merely as presently preferred examples. It is intended that the following claims be interpreted broadly to embrace all the variations of the preferred embodiments disclosed.

Further embodiments of the invention are described in clauses 15 to 37:

Clause 15. A method comprising: recognizing in a computer system a system problem or other eventuality indicating a need for execution by the computer system of at least one chargeable technology; selecting execution of a chargeable technology on said system; executing said selected chargeable technology; collecting data relating to said execution on said computer system; and storing said collected data in a protected storage area on said system.

Clause 16. The method of clause 15 wherein the selecting execution step comprises a selection by a user of the system of a chargeable technology to execute from a menu or list of available chargeable technologies presented to said user.

Clause 17. The method of clause 15 wherein the selecting execution step comprises an automatic selection by the system of a chargeable technology to execute based on the type of system problem or other eventuality recognized.

Clause 18. The method of clause 15 further comprising encrypting and digitally signing the data prior to storing the data.

Clause 19. The method of clause 15 further comprising: entering an alternate operating mode of the system by initiating execution of an alternate operating system; performing the steps of selecting, executing, collecting and storing under control of the alternate operating system; returning control of the system to a primary operating system for normal operation.

Clause 20. The method of clause 19 wherein said alternate operating system is provided on the system in a manner which is hidden from a user of the system and protected from tampering.

Clause 21. The method of clause 15 further comprising: periodically determining if the system is connected to a network; if the system is connected to the network, gathering said stored data and forwarding said data to a predetermined central location on the network.

Clause 22. The method of clause 21 wherein the entire said process is performed without the intervention or knowledge of a user of the system.

Clause 23. A method comprising: receiving at a central location data representing at least one execution by a remote system of at least one chargeable technology; storing said data in a protected area of said central location.

Clause 24. The method of clause 23 further comprising decrypting said data prior to storing said data.

Clause 25. The method of clause 23 wherein said data comprises: a data and time of the execution; an identity of the chargeable technology executed; and unique identifying information associated with the remote system.

Clause 26. The method of clause 25 further comprising: periodically determining if the central location has connectivity to the remote system; if the central location has connectivity to the remote system; gathering the stored data corresponding to said remote system; creating an invoice representing per-usage charges for said execution of said at least one chargeable technology; and forwarding said invoice to the remote system.

Clause 27. The method according to claim 26 wherein said remote system comprises at least two remote systems associated with at least two users within at least one group.

Clause 28. The method according to claim 27 wherein gathering the stored data corresponding to said remote system comprises gathering all stored data corresponding to remote systems associated with members of the same group; wherein creating an invoice comprises creating an invoice representing per-usage charges for all executions of said at least one chargeable technology by members of the same group; and wherein forwarding said invoice to the remote system comprises forwarding said invoice to a network address identified as corresponding to the group.

Clause 29. A service comprising: receiving data from a client system relating to execution by a user on said system of at least one chargeable technology; storing said data in a manner retrievable according to user; periodically retrieving said data according to user and creating a technology usage report for each user indicating at least a number of executions of each chargeable technology by each user.

Clause 30. The service of claim 29, further comprising: configuring the client system with at least one chargeable technology; and configuring the client system with a capability to track and report data relating to the execution by a user of the system of the at least on chargeable technology.

Clause 31. The service of claim 29 wherein said technology report comprises an invoice representing per-usage charges for each execution of said at least one chargeable technology.

Clause 35. A central location computer system comprising: at least one central processing unit (CPU); a memory operatively connected to the CPU; a non-volatile storage operatively connected to the CPU and holding at least a primary operating system for execution on said CPU and effective when executing for controlling the operation of the system; a communication interface operatively connected to said CPU for interfacing said system with a network; a chargeable technology data receiving component for receiving from remote systems data indicative of execution of said remote systems of at least one chargeable technology; and a technology usage data reporting and billing component for periodically sending to the remote systems a usage report detailing the use by the remote systems of the at least one chargeable technology.

Clause 36. The central location computer system of clause 35, further comprising a secure, hidden area of said non-volatile storage for use by said data receiving component in storing the data received from the remote systems.

Clause 37. The central location computer system of clause 36 wherein said usage report comprises an invoice representing per-usage charges for the executions by the remote systems of the at least one chargeable technology.

## Claims

1. A method comprising: charging a first price for a computer system; tracking the execution by the computer system of at least one chargeable technology; and charging an additional price for each execution of the at least one chargeable technology by the computer system.

2. The method of according to claim 1 wherein the first price is lower than a break-even price for a provider of the computer system.

3. The method according to claim 1 or 2 wherein tracking the execution of the chargeable technology comprises collecting and storing data regarding said execution, said data comprising: a data and time of the execution; an identity of the chargeable technology executed; and unique identifying information associated with the computer system.

4. The method according to claim 3 further comprising encrypting the collected data before storing the collected data.

5. The method according to claim 3 wherein charging an additional price comprises: gathering the stored data relating to each execution of a chargeable technology; creating a technology usage report indicating at least the number of times each chargeable technology has been executed; creating an invoice representing per-usage charges of the executions of the at least one chargeable technology; sending the report and the invoice to a user of the computer system.

6. The method according to any one of claims 1 to 5 wherein said computer system comprises at least two computer systems delivered by a system provider to at least two users within a group.

7. The method according to claim 6 wherein tracking the execution of the at least one chargeable technology comprises tracking said execution on all systems within the group, and wherein charging an additional price comprises charging one additional price to the group for all executions of the at least one chargeable technology by the users within the group.

8. A method comprising: selecting execution of a chargeable technology on a client computing system; executing said selected chargeable technology; collecting data relating to said execution on said client computing system; and storing said collected data in a protected storage area on said system.

9. The method of claim 8 further comprising: periodically determining if the client computing system is connected to a network; if the client computing system is connected to the network, gathering said collected data from the protected storage area and forwarding said collected data to a predetermined central location on the network.

10. The method according to claim 9 wherein the determining, gathering and forwarding steps are performed without the intervention or knowledge of a user of said system.

11. The method of claim 8 wherein the selecting execution step comprises initiation by a user of the system.

12. The method of claim 8 wherein the selecting execution step comprises an automatic selection by the system based on an occurrence of a pre-determined event, without the intervention or knowledge of a user of the system.

13. A computer system comprising: at least one central processing unit (CPU); a memory operatively connected to the CPU; a non-volatile storage operatively connected to the CPU and holding at least a primary operating system for execution on said CPU and effective when executing for controlling the operation of the system; a communication interface operatively connected to said CPU for interfacing said system with a network; at least one chargeable technology accessible for execution on said CPU; and a chargeable technology usage tracking component accessible for execution on said CPU for tracking the execution by the system of the at least one chargeable technology.

14. The computer system of claim 13, further comprising an alternate operating system in a protected and hidden area of said non-volatile storage and wherein said alternate operating system executes on said CPU to control the execution of said chargeable technology and said chargeable technology tacking component.

15. The computer system of claim 13, further comprising a secure, hidden area of said non-volatile storage for use by said technology usage tracking component in storing data relating to the execution by the system of said at least one chargeable technology.
